# FASCICULE DE BREVET EUROPEEN

(11) **EP 0 432 023 B1**
(45) Date de publication et mention de la délivrance du brevet: **18.08.1993**
(21) Numéro de dépôt: 90403409.7
(22) Date de dépôt: 30.11.1990
(51) Int. Cl.: B60S 1/08

(54) **Dispositif de balayage asservi, notamment pour essuie-glace**
Gesteuertes Wischgerät, insbesondere für Scheibenwischer
Controlled wiping device, especially for windscreen-wipers

(30) Priorité: 04.12.1989 FR 8915978
(43) Date de publication de la demande: 12.06.1991
(73) Titulaire: VALEO SYSTEMES D'ESSUYAGE, 78180 Montigny-Le-Bretonneux (FR)
(72) Inventeur: Muller, Guy, F-91570 Bievres (FR)
(74) Mandataire: Gamonal, Didier

(56) Documents cités:
- DE-A- 2 637 934
- DE-A- 3 208 121
- DE-A- 3 441 842
- US-A- 4 866 357

## Description

L'invention concerne les dispositifs assurant une fonction de balayage mécanique, et s'applique tout particulièrement aux essuie-glace de véhicule automobile.

La demande de brevet DE-A-3 208 121 propose un perfectionnement aux dispositifs de balayage électromécaniques qui comprend:
- un moyen de pilotage pour engendrer un signal électrique de consigne, évoluant en fonction du temps selon une loi de balayage choisie, et
- au moins une voie de balayage, comprenant:
   . un moteur de balayage,
   . un étage de commande de ce moteur,
   . un détecteur de la position de la partie menée du moteur, et
   . un circuit d'asservissement pour appliquer à l'étage de commande un signal électrique d'erreur représentant la différence entre le signal de consigne et une représentation correspondante de la position détectée.

Cette nouvelle disposition est très intéressante, dans la mesure où elle simplifie considérablement la conception des dispositifs de balayage tels que les essuie-glace. En particulier, elle élimine la nécessité d'une tringlerie.

En outre, elle augmente beaucoup la richesse de possibilités que l'on peut obtenir pour le balayage lui-même: vitesses multiples, fonctionnement coup par coup, position de parquage des essuie-glace, notamment.

Il s'est avéré toutefois que, dans des situations d'exception, l'asservissement pouvait se trouver dans l'impossibilité de forcer le moteur à se trouver dans la position de consigne souhaitée à l'instant considéré. Déjà gênant pour un essuie-glace unique, ceci est beaucoup plus ennuyeux avec plusieurs essuie-glace, puisqu'ils peuvent alors interférer.

La présente invention a essentiellement pour but d'apporter une solution à ce problème.

Selon l'invention, le dispositif de balayage asservi défini plus haut comporte en outre:
- un comparateur de l'amplitude du signal électrique d'erreur à un seuil, et
- un moyen de blocage du moyen de pilotage lorsque l'amplitude du signal électrique d'erreur dépasse le seuil.

En pratique, le comparateur opère en valeur absolue, et de préférence sur signaux numériques. Il est particulièrement avantageux, mais non nécessaire, que le moyen de pilotage, le détecteur de position, le circuit d'asservissement et le comparateur opèrent sur signaux numériques. Dans ce cas, la prise en compte de l'étendue de balayage de chaque voie s'effectue au niveau de l'étage de commande du moteur, ainsi que du détecteur de position, ou bien du circuit de traitement qui l'accompagne.

Dans un mode de réalisation particulièrement avantageux, le moyen de pilotage comporte une horloge, un compteur d'adresse et une table de fonctions adressée par ce compteur au rythme des impulsions d'horloge; le moyen de blocage interrompt la fourniture d'impulsions d'horloge au compteur d'adresse tant que l'amplitude du signal électrique d'erreur dépasse le seuil. Ce seuil peut être fixé à une fraction de l'ordre du dixième de la tension (ou du signal) maximale de commande du moteur. De la sorte, on obtient une fonction particulièrement intéressante, comme on le verra plus loin.

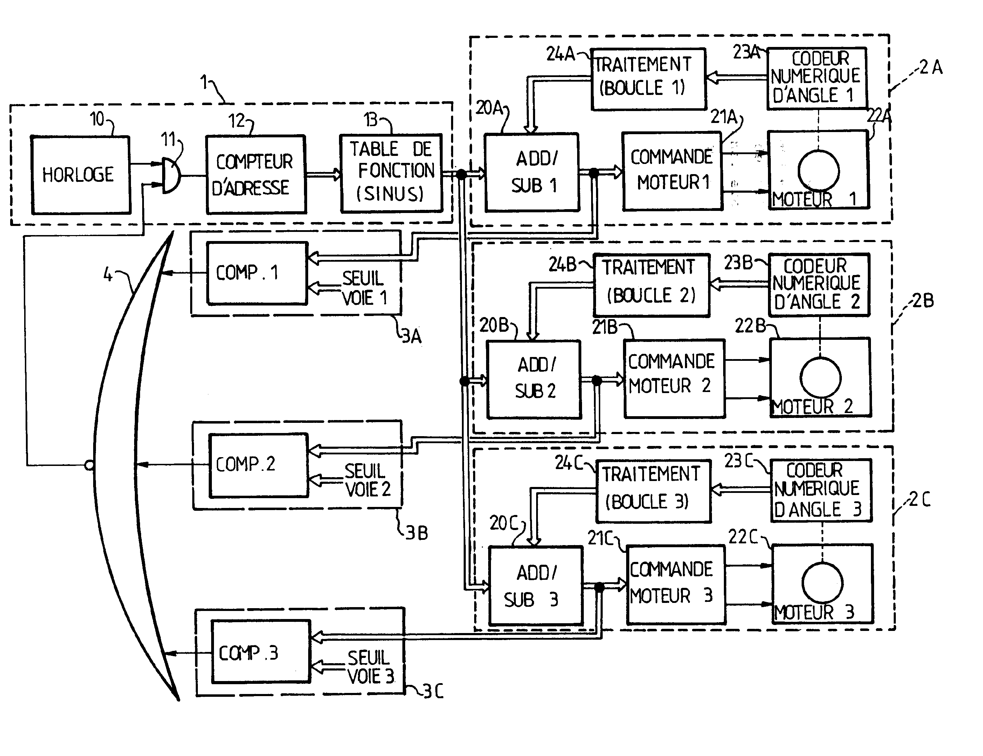

D'autres caractéristiques et avantages de l'invention apparaîtront à l'examen de la description détaillée ci-après et du dessin annexe, dont la figure unique illustre un mode de réalisation préférentiel de l'invention.

Comportant pour l'essentiel des éléments de caractère certain, le dessin annexé est à considérer comme intégré à la description. Il pourra donc servir non seulement à compléter celle-ci, mais aussi pour contribuer à la définition de l'invention, le cas échéant.

Le dessin fait apparaître en 1 le moyen de pilotage commun à plusieurs voies de balayage 2A, 2B et 2C.

Le moyen de pilotage 1 comprend une horloge 10 suivie d'une porte ET 11 dont l'autre entrée est normalement à l'état vrai, et qui va donc transmettre les impulsions d'horloge à un compteur d'adresse 12 qui vient adresser une table de fonctions 13. Celle-ci fournit, au fil des impulsions d'horloge, des valeurs numériques représentant une fonction sinusoïdale. La période de cette fonction définit la vitesse de balayage, et peut être ajustée en agissant sur la fréquence des impulsions de l'horloge 10. Un fonctionnement au coup par coup peut également être obtenu en commandant la transmission des impulsions d'horloge pendant une seule alternance de la fonction sinusoïdale.

Les valeurs sinusoïdales ainsi disponibles en sortie de la table 13 sont appliquées à une entrée d'additionneurs-soustracteurs 20A, 20B et 20C faisant respectivement partie des voies de balayage 2A, 2B, 2C. Dans la suite, on décrira seulement en détail la voie 2A, les autres étant pour l'essentiel de structure semblable.

Chaque voie comporte un moteur 22A, sur l'arbre duquel est monté un codeur numérique d'angle 23A.

Bien qu'il puisse être procédé autrement, on admet ici que la sortie du codeur numérique d'angle est normalisée par rapport à l'excursion totale demandée au moteur 22A de la voie considérée. Si par exemple on souhaite des angles de balayage différents pour les trois voies, la pleine échelle de sortie des codeurs numériques d'angle 23A, 23B et 23C sera la même, et correspondra à la pleine excursion de balayage du moteur associé.

Les valeurs de position angulaire ainsi codées en 23A sont transmises à un circuit de traitement 24A dans chaque voie. Le circuit de traitement a pour effet éventuellement de réaliser une mise en forme des signaux de codage si nécessaire, et surtout de tenir compte de la vitesse dans la boucle d'asservissement, pour préserver la stabilité de celle-ci, d'une façon connue de l'homme du métier.

La sortie du circuit de traitement 24A vient comme seconde entrée sur l'additionneur 20A respectivement associé. Celui-ci fournit alors à un étage de commande 21A du moteur concerné un signal numérique. Ce signal numérique tient lieu de signal d'erreur, et l'étage de commande concerné va s'en servir pour commander la position du moteur dans le sens tendant à corriger l'erreur.

Là encore, chaque étage de commande devra tenir compte de la pleine excursion affectée au moteur concerné. Ces étages de commande peuvent être réalisés de différentes manières. Un moyen convenable consiste, s'agissant en 22 d'un moteur à courant continu, de réaliser une commande impulsionnelle de celui-ci, avec un nombre d'impulsions de commande qui dépend de l'amplitude du signal d'erreur.

Les boucles d'asservissement ainsi obtenues fonctionnent de la manière décrite dans le Brevet antérieur No 89 08442, dont elles constituent un perfectionnement sous forme numérique. On comprend qu'elles vont permettre en principe de positionner chaque moteur 22 d'une manière définie par la table de fonctions 13, compte tenu de l'excursion de balayage affectée à ce moteur.

Et, dès lors qu'on dispose d'une table de fonctions 13 unique, les trois voies de balayage vont fonctionner d'une manière synchronisée.

Toutefois, il peut intervenir des conditions dans lesquelles le couple d'un des moteurs n'est pas suffisant, malgré la commande qui lui est affectée, pour vaincre des résistances provenant de frottements ou d'obstacles s'opposant au balayage.

La présente invention vient apporter une solution élégante à ce problème.

A cet effet, les signaux d'erreur disponibles en sortie de chacun des additionneurs-soustracteurs 20A, 20B, 20C sont également transmis respectivement à des comparateurs numériques 3A, 3B et 3C, munis chacun de seuils.

Les signaux numériques de seuil des différents comparateurs peuvent être différents. Ici, dans la mesure où le signal d'erreur est le même, l'adaptation à l'excursion de chaque moteur intervenant en aval, ces seuils peuvent être identiques.

Les comparateurs opèrent en valeur absolue, c'est-à-dire qu'ils ignorent l'information de signe représentée la plupart du temps par le bit de poids supérieur des signaux numériques.

Lorsqu'un des comparateurs détecte que le signal d'erreur de la voie qui lui est associée dépasse le seuil, sa sortie vient, à travers la porte OU 4, faire passer à faux la seconde entrée de la porte ET 11, et par conséquent stopper la transmission d'impulsions d'horloge vers le compteur d'adresse 12 et la table de fonctions 13. Il en résulte que la valeur de consigne est figée à sa valeur instantanée en cours, tant que l'un des comparateurs voit un signal d'erreur dépassant son seuil.

S'il s'agit de frottements excessifs, que le moteur peut vaincre, mais avec retard par rapport à son fonctionnement habituel, alors le signal d'erreur va progressivement diminuer, et l'on va pouvoir retrouver, lorsqu'il redescend en dessous du seuil, un fonctionnement synchrone des différentes voies de balayage.

S'il s'agit au contraire d'un obstacle que le moteur ne peut vaincre, alors le dispositif de balayage est complètement bloqué dans toutes ses voies. A ce moment, un signal d'alarme peut être transmis à une unité de traitement externe pour intervenir.

Une situation classique est celle où, en hiver, les essuie-glace d'un véhicule sont bloqués par le givre. L'information d'alarme pourrait alors servir par exemple à mettre en fonction le dégivrage, jusqu'à ce que le dispositif de balayage puisse à nouveau fonctionner.

Bien entendu, dans le mode de réalisation qui vient d'être décrit, tout ou partie des fonctions numériques impliquées pourront être réalisées à l'intérieur d'un dispositif du genre microprocesseur.

En variante, la présente invention peut être également mise en oeuvre dans une réalisation analogique. En ce cas, le moyen de pilotage 1 peut être constitué d'un générateur de dents de scie commandé, suivi d'un générateur sinusoïdal, par intégration de la dent de scie. Les étages 20 sont des amplificateurs opérationnels. Les codeurs angulaires peuvent être alors soit numériques, soit analogiques, de même que l'organe de traitement de boucle 24.

Dans tous les cas, il est également possible de ne pas utiliser en commun la table de fonctions 13, mais au contraire de prévoir une table de fonctions 13 pour chaque voie de balayage, ce qui peut servir si l'on désire des fonctions de balayage plus sophistiquées ou légèrement différentes pour les différentes voies. Dans ces conditions, on pourra alors revenir à des tensions de seuil différentes pour les différents comparateurs 3A à 3C. Bien entendu, les lois de balayage ne sont pas nécessairement sinusoïdales.

Typiquement, on peut utiliser pour réaliser un balayage d'essuie-glace s'étendant sur 110° des moteurs à courant continu dont la tension de commande maximale est de l'ordre de 10 volts, soit environ 100 millivolts par degré de balayage. Les expériences menées jusqu'à présent par la Demanderesse ont montré que la fixation du seuil des comparateurs à environ 1/20 de la pleine commande du moteur permettait d'obtenir un résultat satisfaisant.

Toutefois, cette valeur pourra être modifiée en fonction des applications.

L'invention peut être intéressante pour un dispositif de balayage à une seule voie, mais elle prend toute sa signification dans un dispositif de balayage à deux voies, voire à trois voies, comme il en existe sur certains poids lourds ou véhicules de transport en commun.

Dans ce qui précède, on a donné au dispositif une fonction de surveillance de situations anormales. Il peut également servir, de façon très avantageuse, dans des situations normales, pour régulariser la vitesse de balayage. Dans ce cas, on fixe les seuils des comparateurs à une valeur plus basse que ce qui a été indiqué précédemment. De façon a priori inattendue, il s'est avéré qu'ensuite les dispositifs de balayage opérant d'une manière synchronisée s'attendaient les uns les autres, lorsque l'un d'entre eux rencontrait temporairement une force de frottement supérieure à la normale.

## Revendications

1. Dispositif de balayage asservi, notamment pour essuie- glace, du type comprenant :
- un moyen de pilotage (1) pour engendrer un signal électrique de consigne, évoluant en fonction du temps selon une loi de balayage choisie, et
- au moins une voie de balayage (2 A, B, C), comprenant:
. un moteur de balayage (22),
. un étage de commande (21) de ce moteur (22),
. un détecteur (23) de la position de la partie menée du moteur (22), et
. un circuit d'asservissement (20, 24) pour appliquer à l'étage de commande un signal électrique d'erreur représentant la différence entre le signal de consigne et une représentation correspondante de la position détectée, caractérisé en ce qu'il comporte:
- un comparateur (3 A, B, C) de l'amplitude du signal électrique d'erreur à un seuil, et
- un moyen (4, 11) de blocage du moyen de pilotage (1) lorsque l'amplitude du signal électrique d'erreur dépasse le seuil.

2. Dispositif selon la revendication 1, caractérisé en ce qu'il comporte au moins deux voies de balayage, (A, B C) commandées à partir du même signal de consigne, et deux comparateurs (3A, 3B, 3C) commandant le blocage dans une fonction OU (4).

3. Dispositif selon l'une des revendications 1 et 2, caractérisé en ce que le comparateur (3) opère en valeur absolue.

4. Dispositif selon l'une des revendications 1 à 3, caractérisé en ce que le seuil correspond à une fraction de l'ordre du dixième de la tension maximale de commande du moteur (22).

5. Dispositif selon l'une des revendications 1 à 4, caractérisé en ce que le circuit d'asservissement (20,24) établit ladite représentation en fonction de la position et de la vitesse de la partie menée du moteur (22).

6. Dispositif selon l'une des revendications 1 à 5, caractérisé en ce que le moyen de pilotage (1), le détecteur de position (23), le circuit d'asservissement (20, 24) et le comparateur (3) opèrent sur signaux numériques, la prise en compte de l'étendue de balayage s'effectuant au niveau de l'étage de commande (21) du moteur (22) ainsi que du détecteur (23) de position.

7. Dispositif selon la revendication 6, caractérisé en ce que le moyen de pilotage (1) comporte une horloge (10), un compteur d'adresse (12) et une table de fonction (13) adressée par ce compteur (12) au rythme des impulsions d'horloge (10), et en ce que le moyen de blocage (11) interrompt la fourniture d'impulsions d'horloge (10) au compteur d'adresse (12).

## Patentansprüche

1. Gesteuertes Wischgerät, insbesondere für Scheibenwischer, enthaltend:
- ein Regelmittel (1) zur Erzeugung eines elektrischen Sollwertsignals, entwickelt entsprechend der Zeit nach einem gewählten Wischgesetz, und
- wenigstens eine Wischstrecke (2 A, B, C), enthaltend:
. einen Wischmotor (22),
. eine Steuerstufe (21) für diesen Motor (22),
. einen Stellungsgeber (23) für den angetriebenen Teil des Motors (22), und
. einen Regelkreis (20, 24) zum Anlegen eines elektrischen Fehlersignals an die Steuerstufe, welches die Differenz zwischen dem Sollwertsignal und einer entsprechenden Darstellung der festgestellten Position darstellt, **dadurch** **gekennzeichnet**, daß es folgendes enthält:
- einen Komparator (3 A, B, C) für die Amplitude des elektrischen Fehlersignals, mit einem Schwellwert, und
- ein Mittel (4, 11) zur Blockierung des Regelmittels (1), wenn die Amplitude des elektrischen Fehlersignals den Schwellwert überschreitet.

2. Gerät nach Anspruch 1, **dadurch** **gekennzeichnet**, daß es wenigstens zwei Wischstrecken (A,B C) enthält, die vom gleichen Sollwertsignal aus gesteuert werden, und zwei Komparatoren (3A, 3B, 3C), die die Blockierung in einer ODER-Funktion (4) steuern.

3. Gerät nach einem der Ansprüche 1 und 2, **dadurch gekennzeichnet** , daß der Komparator (3) mit Absolutwert arbeitet.

4. Gerät nach einem der Ansprüche 1 bis 3, **dadurch gekennzeichnet** , daß der Schwellwert einem Anteil in der Größenordnung eines Zehntels der max. Steuerspannung des Motors (22) entspricht.

5. Gerät nach einem der Ansprüche 1 bis 4, **dadurch gekennzeichnet** , daß der Regelkreis (20, 24) die genannte Darstellung entsprechend der Position und der Geschwindigkeit des angetriebenen Teils des Motors (22) bewirkt.

6. Gerät nach einem der Ansprüche 1 bis 5, **dadurch gekennzeichnet** , daß das Regelmittel (1), der Stellungsgeber (23), der Regelkreis (20, 24) und der Komparator (3) mit Digitalsignalen arbeiten, wobei der Wischbereich in Höhe der Steuerstufe (21) des Motors (22) sowie des Stellungsgebers (23) berücksichtigt wird.

7. Gerät nach Anspruch 6, **dadurch** **gekennzeichnet**, daß das Regelmittel (1) einen Taktgeber (10), einen Adressenzähler (12) und eine Funktionstabelle (13) aufweist, die von diesem Zähler (12) im Rhythmus der Taktimpulse (10) angesteuert wird, und daß das Blockierungsmittel (11) die Versorgung des Adressenzählers (12) mit Taktimpulsen (10) unterbricht.

## Claims

1. Apparatus for synchronised wiper control, in particular for windshield wipers, being of the type comprising:
- a regulating means (1) for generating an electrical control signal which develops as a function of time in accordance with a selected wiping characteristic, and
- at least one wiper control means (2A, B, C), comprising: a wiper motor (22), a control stage (21) for the said motor (22), a detector (23) for detecting the position of the driven part of the motor (22), and a synchronising circuit (20, 24) for applying to the control stage an electrical error signal representing the difference between the control signal and a corresponding function signal representing the detected position,
characterised in that it includes :
- a comparator (3A, B, C) for comparing the amplitude of the electrical error signal with a threshold value, and
- means (4, 11) for blocking the regulating means (1) when the amplitude of the electrical error signal exceeds the threshold value.

2. Apparatus according to Claim 1, characterised in that it includes at least two wiper control means (A, B, C) controlled in response to the same control signal, and two comparators (3A, 3B, 3C) controlling the blocking function through an OR function (4).

3. Apparatus according to Claim 1 or Claim 2, characterised in that the comparator (3) operates in absolute values.

4. Apparatus according to one of Claims 1 to 3, characterised in that the threshold value corresponds to a fraction of the order of one tenth of the maximum control voltage of the motor (22).

5. Apparatus according to one of Claims 1 to 4, characterised in that the synchronising circuit (20, 24) generates the said function signal in terms of the position and speed of the driven part of the motor (22).

6. Apparatus according to one of Claims 1 to 5, characterised in that the regulating means (1), the position detector (23), the synchronising circuit (20, 24) and the comparator (3) operate on digital signals, the extent of wiping being taken into account at the level of the control stage (21) of the motor (22) and at that of the position detector (23).

7. Apparatus according to Claim 6, characterised in that the regulating means (1) comprises a clock (10), an address counter (12), and a function table (13) addressed by the said counter (12) in time with the pulses of the clock (10), and in that the blocking means (11) interrupts the transmission of pulses from the clock (10) to the address counter (12).
